# EUROPÄISCHE PATENTSCHRIFT

(11) **EP 0 554 223 B1**
(45) Veröffentlichungstag und Bekanntmachung des Hinweises auf die Patenterteilung: **10.04.1996**
(21) Anmeldenummer: 93810051.8
(22) Anmeldetag: 26.01.1993
(51) Int. Cl.: C02F 1/28, C02F 9/00, C02F 1/00, B01J 20/20

(54) **Verfahren zur Herstellung einer Filtereinheit sowie nach dem Verfahren hergestellte Filtereinheit**
Process for preparing a filter unit and the filter unit prepared by said process
Procédé de préparation d'un dispositif de filtration et le dispositif de filtration préparé selon ledit procédé

(30) Priorität: 29.01.1992 CH 248/92
(43) Veröffentlichungstag der Anmeldung: 04.08.1993
(73) Patentinhaber: Domme, Isfried, D-87766 Memmingerberg (DE)
(72) Erfinder: Domme, Alois, W-7956 Rot 3 (DE)
(74) Vertreter: OK pat AG

(56) Entgegenhaltungen:
- EP-A- 0 253 132
- WO-A-91/10493
- DE-A- 2 945 609
- DE-A- 3 105 887
- DE-B- 3 006 171
- US-A- 1 396 773
- US-A- 4 753 728

## Beschreibung

Die Erfindung betrifft Verfahren zur Herstellung einer Filtereinheit in Gestalt eines gas- und flüssigkeitsdurchlässigen, adsorptiven Formkörpers.

Reinigungsfilter für die Reinigung von Flüssigkeiten oder Gasen sind in mannigfaltiger Bauweise bekannt. Bei einer Gruppe solcher Filter ist eine lose Schüttung von Körnern eines adsorbierenden Materials (z.B. Aktivkohle) zwischen zwei porösen, die Körner zusammenhaltenden Wänden eingefüllt (beispielsweise DE-A-32 04 022). Da hierbei keinerlei Zusammenhalt innerhalb des Granulats besteht, sind dessen Durchfluss- und Filtereigenschaften während der Gebrauchsdauer schwer kontrollierbar: In der Strömung des Filtrats und infolge Erschütterungen können Umlagerungen verschiedener Korngrössen-Anteile oder Auswaschungen, bzw. örtliche Verstopfungen durch Feinanteile usw. auftreten. Vor allem aber kann die - durch "innere Porosität" der Körner an sich gegebene - Adsorptionsfähigkeit des Granulats in nur geringem Masse zur Wirkung kommen, da das Filtrat grösstenteils in den Korn-Zwischenräumen am Filtermaterial vorbeiströmt und die Körner im wesentlichen nur oberflächlich berührt. Filtereinheiten dieser Art (auch "Filterpatronen" oder "Filterkerzen" genannt) müssen normalerweise nach relativ kurzer Einsatzdauer ersetzt oder im Granulat erneuert werden.

Ein anderes, der Reinigung von Leitungswasser dienendes Filter, welches als Filtereinheit einen adsorptiven Formkörper aufweist, ist aus der EP-A-0 253 132 bekannt. Der Formkörper ist als selbsttragender Sinterkörper ausgebildet und besteht aus fein verteiltem Adsorptionsmittel, thermoplastischem Kunststoff-Bindemittel und oligodynamischem Material. Bei der Herstellung des Sinterkörpers durch thermoplastisches Sintern wird ein erheblicher Teil der Kornoberflächen und Mikroporen des Adsorptionsmittels durch anhaftendes und eindringendes Termoplast-Material verklebt bzw. verstopft, wobei die entsprechende innere Oberfläche der Körner für die Adsorption verloren geht. Die Adsorptionskapazität der Filtereinheit insgesamt ist dadurch schwer beeinträchtigt.

Mit der vorliegenden Erfindung soll ein zweckmässiges Herstellverfahren zur Produktion von Filtereinheiten bzw. Adsorptions-Formkörpern vorgeschlagen werden, bei welchem die Adsorptivität des Adsorptionsmittels voll erhalten bleibt oder womöglich - trotz Verwendung eines Bindemittels für die Formgebung - durch letzteres noch gesteigert wird. Dabei soll das Verfahren für die industrielle Produktion geeignet und durch einfache Verfahrensschritte gut beherrschbar sein bzw. reproduzierbare Filtereigenschaften liefern.

Diese Aufgabe wird erfindungsgemäss dadurch gelöst,
- dass man Körner eines Adsorptionsmittels, insbesondere Aktivkohle, und ein körniges, thermoplastisches organisches Bindemittel trocken mischt,
- dass man das trockene, körnige Gemisch in eine Form einbringt und in dieser verdichtet,
- dass man das Gemisch in der Form bei weitgehender Verhinderung von Luftzutritt auf eine Temperatur wesentlich über dem plastischen Bereich des Bindemittels erhitzt und solange hält, dass ein Verschwelen und mindestens teilweises Verkoken des Bindemittels eintritt,
- und dass man den so gebildeten Formkörper nach Abkühlung ausformt.

Bei einer so hergestellten Filtereinheit bleibt einerseits die Adsorptionsfähigkeit des Materials, d.h. die wirksame Oberfläche wie auch die innere Porosität der Körner des Adsorptionsmittels praktisch voll erhalten. Zudem wird, bei gegebenem Volumen des Adsorptionskörpers, dessen Adsorptionskapazität noch erhöht, indem das verwendete organische Bindemittel infolge seiner Verschwelung und teilweisen Verkokung ebenfalls zum Teil hoch porös, d.h. "aktiviert" wird und gleichermassen als Adsorptionsmittel wirkt. Die Verfahrensschritte - trocken mischen, einfüllen, verdichten, erhitzen nach Zeitprogramm, ausformen - sind einfach und auch bei Massenherstellung leicht beherrschbar.

Als Bindemittel kommen verschiedene, auch anderweitig als Binder für Granulate bei der Herstellung von Formkörpern verwendete organische, thermoplastische Stoffe in Frage. Als besonders geeignet erweist sich ein Granulat eines hoch- oder ultrahochmolekularen, thermoplastischen Kunststoffes, insbesondere Polyethylen, welcher beim Erhitzen in einer viskosen Uebergangsphase bindefähig ist und dessen Makromoleküle nach dem Verkoken (weitgehendes Verschwelen bzw. Zersetzen unter Austreibung der flüchtigen Anteile) eine äusserst feinporige Reststruktur in Form eines Kohlenstoff-"Gerüstes" bilden.

Die Erfindung bezieht sich ferner auf eine nach dem oben genannten Verfahren hergestellte Filtereinheit, welche dadurch gekennzeichnet ist, dass im Formkörper die Körner des Adsorptionsmittels in der Reststruktur eines verschwelten, mindestens teilweise offenporig verkokten und Mikroporen aufweisenden, organischen Bindemittels fixiert sind, wobei die Reststruktur des Bindemittels eine Körnigkeit aufweist, welche Makroporen zwischen den Körnern des Adsorptionsmittels freilässt.

Bei der vorerwähnten, hohen Adsorptionsfähigkeit des Formkörpers, die teilweise durch den Beitrag des verkokten Bindemittels erzielt wird, zeigt es sich überraschenderweise, dass trotz weitgehender thermischer "Zersetzung" des Bindemittels der Formkörper eine gute mechanische Festigkeit erreicht, die für manche Verwendungsarten durchaus genügt. Es zeigt sich ferner, dass im Vergleich zur Anwesenheit von Bindemittel aus thermoplastischem Kunststoff der Strömungswiderstand im Formkörper auch bei hoher "Packungsdichte" eher geringer ist. Dies wird darauf zurückgeführt, dass ein verkoktes, mikroporöses Bindemittel nicht mehr, wie Kunststoffe im allgemeinen, wasserabstossend ist.

Für Anwendungsfälle, bei denen im Filtrat vorhandene feste oder gallertige Verunreinigungen durch Oberflächen-Filtration abgefangen und vom Adsorptionskörper ferngehalten werden sollen, wird eine Variante der Erfindung vorgeschlagen. Bei dieser wird mindestens an der Eintrittsseite des Adsorptionskörpers eine satt anschliessende, poröse Stützwand vorgesehen, die als mechanisches Feinfilter ausgebildet ist. Dadurch ist es möglich, die Filtereinheit wirksam und wiederholt rückzuspülen, und der Adsorptionskörper bleibt vor mechanischer Verstopfung bewahrt. Die satt anliegenden Stützwände geben schliesslich dem Adsorptionskörper (Formkörper) zusätzlichen mechanischen Halt bei Schlägen oder Druckbeanspruchung, wodurch Zerfall, Bruch oder Rissbildung im Formkörper verhindert werden und eine räumlich gleichmässig verteilte Filtrat-Strömung gewährleistet ist.

Es können Reinigungsfilter nach Bedarf mit einer oder mehreren solchen Filtereinheiten gebaut werden. Anwendungen sind im Bereich der Brauchwasseraufbereitung, Abwasserreinigung, (Haushalt -)Trinkwasserbereitung, in der Getränke-, Lebensmittel- und chemischen Industrie, usw., aber auch zum Reinigen von Gasen vorgesehen.

Besondere, zweckmässige Ausführungsformen des Herstellungsverfahrens und der Filtereinheit gemäss der Erfindung sind in den abhängigen Ansprüchen zu den Patentansprüchen 1 bzw. 10 angegeben.

Nachstehend wird die Erfindung anhand von Ausführungsbeispielen und in Verbindung mit der Zeichnung näher erläutert.
- Fig. 1: zeigt als erstes Beispiel eine hohlzylindrische Filtereinheit als hälftige, teilweise geschnittene, abgebrochene Ansicht,
- Fig. 2: zeigt eine zum Einbau bestimmte Filtereinheit mit Stützwänden gemäss einer zweiten Ausführungsform im Längsschnitt,
- Fig. 3: zeigt als drittes Ausführüngsbeispiel, halb im Schnitt und halb in Ansicht, ein Reinigungsfilter mit hohlzylindrischer Filtereinheit, ebenfalls mit Stützwänden,
- Fig. 4: veranschaulicht als Teilschnitt eine Variante des Filters nach Fig. 3, und
- Fig. 5: ist ein Radialschnitt entlang der Linie V-V in Fig. 4.

Im folgenden wird vorerst die zweckmässige Herstellung-einer Filtereinheit 10, insbesondere ihres Adsorptionskörpers 8, 8' bzw. 18 sowie des mechanischen Feinfilters 4 bzw. 14 anhand konkreter Verfahrensbeispiele beschrieben:

Für den Adsorptionskörper verwendet man im Prinzip ein Gemisch von Körnern eines Adsorptionsmittels, insbesondere Aktivkohle (gegebenenfalls auch andere, z.B. Silicagel usw.) und eines körnigen, thermoplastischen organischen Bindemittels, vorzugsweise ein Granulat eines thermoplastischen Kunststoffes, insbesondere hochmolekulares Polyethylen. Die Gemischkomponenten werden trocken gemischt, in eine Form eingebracht und in dieser verdichtet. Das Gemisch in der Form wird dann bei weitgehender Verhinderung von Luftzutritt auf eine Temperatur erhitzt, die wesentlich über dem plastischen Bereich des Bindemittels liegt. Diese Temperatur, bei der ein langsames Verschwelen des Bindemittels erfolgt, wird solange gehalten, bis das Bindemittel jedenfalls zum Teil bis überwiegend oder ganz verkokt ist. Der so entstandene Formkörper wird dann nach ausreichender Abkühlung ausgeformt. Gegebenenfalls wird der Formkörper anschliessend zwischen einer eintrittsseitigen und einer austrittsseitigen Stützwand eingefasst.

Zur Erzielung besonderer Eigenschaften des Formkörpers, vor allem einer gesteigerten Adsorptionsfähigkeit, ist es von Vorteil, ein Bindemittel-Granulat zu verwenden, dessen Körner offene Mikroporen aufweisen. Vor dem Vermengen des Bindemittels mit dem Adsorptionsmittel wird zweckmässigerweise eine Vormischung des Bindesmittel-Granulats mit staubfeiner Rohle hergestellt.

Beispiel: Für eine Vormischung werden etwa 60 % staubfeiner Kohle (gemahlene, verkokte Kokosschalen) und etwa 40 % Bindemittel verwendet, letzteres in Form eines Granulats (Korngrösse kleiner als etwa 0,1 mm) eines ultrahochmolekularen, mikroporösen Polyethylens, im Handel unter der Bezeichnung "Hostalen GUR" (Sorte GUR 212) der Firma Hoechst (Hoechst Aktiengesellschaft, Frankfurt am Main, Deutschland). Diese Komponenten der Vormischung werden in einem Hochgeschwindigkeits-Rührwerk bei 3000 Umdrehungen/min. während etwa 15 Minuten vermischt. Bei einer solchen Intensivmischung gelangt ein Teil des Kohlenstaubes in die feinen Poren der Bindemittelkörner, was später zur Kompaktheit und Adsorptionsfähigkeit des Formkörpers beiträgt.

Für die Hauptmischung werden etwa 40 % der erwähnten Vormischung und 60 % granulierte Aktivkohle (z.B. aus Kokosschalen, gebrochen, Korngrösse 2-3 mm) verwendet und miteinander trocken vermischt, jedoch mit geringerer mechanischer Intensität, um die Körnigkeit des Granulats zu erhalten. Dabei wird das feine Bindemittel-(Hochpolymer-)Granulat zunächst rein mechanisch in die grob strukturierte Oberfläche der Aktivkohle-Körner hineingemischt und in deren gröberen Poren und Verästelungen mechanisch "verklemmt".

Das Hauptgemisch wird dann in eine dem herzustellenden Formkörper entsprechende Form gefüllt und gepresst, wobei der Pressdruck im wesentlichen die Dichte wie auch die Adsorptionsleistung und den Druckabfall des entstehenden Adsorptionskörpers bestimmt. Anstatt durch Druck, oder zusätzlich zu diesem, kann das Gemisch auch durch Vibrieren in der Form verdichtet werden.

Das verdichtete, trockene Gemisch wird nunmehr in der Form in einen Ofen eingesetzt und während etwa 1 1/2 Stunden auf einer Temperatur von 330 bis 350 °C. gehalten. Dies soll unter weitgehender Verhinderung von Luftzutritt von aussen erfolgen, um eine Verbrennung des Bindemittels zu verhindern; die beim Verschwelen entstehenden Gase und Dämpfe müssen jedoch entweichen können, wobei sie die im Gemisch eingeschlossene Luft weitgehend verdrängen.

Im Einzelnen spielt sich mit zunehmender Temperatur im Materialgemisch folgendes ab:

Bei stetigem Temperaturanstieg im Material geht das thermoplastische Bindemittel in einem Uebergangs-Temperaturbereich (je nach Material ca. 180 - 250 °C) zunächst eine Bindung mit den Körnern des Adsorptionsmittels ein. Anschliessend, bei weiterer Temperatursteigerung, beginnt das Verschwelen, wobei die Schwelgase ein Aufschäumen der porösen Bindemittel-Körner bewirken, deren Material sich dadurch in Poren von benachbarten Kohlekörnern "verhakt" bzw. verankert. Solange sich in der im wesentlichen dichten Form noch Luftsauerstoff befindet, kommt auch eine teilweise Verbrennung zustande, wobei sich das hochmolekulare Bindemittel zu Kohlendioxid und Wasserdampf zersetzt. Bei weiterem Temperaturanstieg und mangelndem Sauerstoff wird jedoch das Bindemittel praktisch weitgehend verschwelt und teilweise verkokt, wobei die organische Grundstruktur der Makromoleküle als äusserst feinporiges Kohlenstoff-"Gerüst" im wesentlichen erhalten bleibt. Der nunmehr feste "Restschaum" der einzelnen Bindemittel-Körner bildet eine von Mikroporen durchsetzte Gittterstruktur, in der die Kohlekörner fixiert werden. In der Reststruktur bleibt auch noch eine gewisse (ursprüngliche) Körnigkeit des Bindemittels erhalten, welche Makroporen zwischen den Körnern des Adsorptionsmittels freilässt.

Die erwähnte Verkokung kommt auch einer Aktivierung des organischen Bindemittels gleich, so dass dessen mikroporöse Struktur zur Adsorptionsfähigkeit des Adsorptionskörpers beiträgt. Vor allem aber sind die Körner des Adsorptionsmittels dank der Verschwelung des Bindemittels kaum verklebt oder "verstopft", sondern behalten ihre Porosität bei. Ein so hergestellter Formkörper weist natürlich eine insgesamt erheblich dichtere und einheitlichere Struktur und vor allem eine wesentlich grössere "innere", adsorptiv wirksame Oberfläche auf als eine lose Schüttung eines Granulats. (Unter "Mikroporen" versteht man solche mit einem Durchmesser bis 2 nm [2x10⁻⁹ m], unter "Makroporen" solche von über 50 nm, dazwischen liegt der Bereich der "Mesoporen"; die Mikroporen tragen wesentlich zur grösse der "inneren Oberfläche" bei, an der die Adsorption im wesentlichen stattfindet).

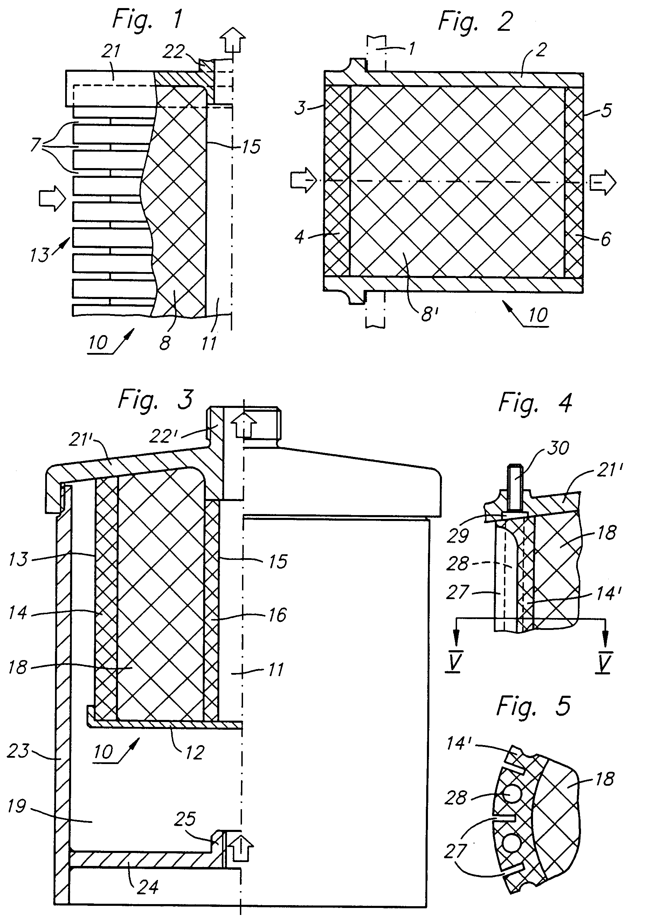

Die Fig. 1 zeigt als Teildarstellung ein Beispiel einer auf die beschriebene Weise hergestellten Filtereinheit 10. Es handelt sich um einen im wesentlichen hohlzylindrischen Adsorptionskörper 8 mit einer Innenbohrung 11. Der Körper wird vom Filtrat radial durchströmt, d.h. die Zylinder-Aussenseite bildet die Eintrittsseite 13 und die Wandung der Bohrung 11 bildet die Austrittsseite 15. Stirnseitig ist der Adsorptionskörper 8 in einem Deckel 21 gefasst, welcher einen Stutzen 22 für den Austritt des gereinigten Filtrats aufweist.

Bezüglich des inneren Aufbaus des Adsorptionskörpers 8 ist wesentlich, dass er aus untereinander verbundenen, porösen Körnern eines Adsorptionsmittels, insbesondere Aktivkohle, gebildet ist. Infolge des weiter oben beschriebenen Herstellungsverfahrens sind die adsorptiven Körner dadurch gebunden, dass sie in der Reststruktur des verschwelten, mindesterns teilweise offenporig verkokten und Mikroporen aufweisenden organischen Bindemittels fixiert sind.

Es kann von Vorteil sein, die Eintrittsseite 13 des Körpers 8, wie dargestellt, mit einer Vielzahl von Umfangsnuten 7 oder ähnliche Vertiefungen zu versehen. Beim Einfräsen oder Sägen der Nuten 7 mittels rotierender Kreissägeblätter werden die dort im Körper gebundenen Kohlekörner angeschnitten. Durch die Nuten 7 wird die eintrittsseitige Oberfläche stark vergrössert. Dadurch wird ermöglicht, dass im Filtrat vorhandene feste oder gallertige Verunreinigungen sich in erheblichen Mengen an der Oberfläche anlagern können, ohne diese zu verstopfen. Andernfalls könnte infolge dieser mechanischen Oberflächenfilterung die Filtereinheit verstopft und unbenützbar werden, lange bevor die Adsorptionskapazität im Innern des Körpers 8 erschöpft ist. (Anhand der Fig. 3 bis 5 werden weiter unten weitere Beispiele von Filtern mit hohlzylindrischem Adsorptionskörper 18 beschrieben, welcher jedoch dort mit Stützwänden 14, 16 ergänzt ist.)

Fig. 2 zeigt ein einfaches Ausführungsbeispiel einer Filtereinheit 10 gemäss der Erfindung, die in ein strichpunktiert angedeutetes, tragendes Gehäuse- oder Anlageteil 1 eines Reinigungsfilters eingebaut und vom Filtrat in Pfeilrichtung durchströmt ist. Die Filtrat-Eintrittsseite der Filtereinheit ist mit 3, die Filtrat-Austrittsseite mit 5 bezeichnet. Je nach Anforderungen an das Reinigungsfilter (Durchflussleistung des Filtrats, Druckabfall usw.) können mehrere solche Filtereinheiten 10 bezüglich der Filtrat-Strömung nebeneinander oder hintereinander, vorzugsweise austauschbar, in einem Reinigungsfilter bzw. in einer grösseren Filteranlage eingebaut sein.

Die Filtereinheit 10 nach Fig. 2 ist folgendermassen aufgebaut:

In einem rohrförmigen Gehäuse 2 befinden sich ein Adsorptionskörper 8' der oben beschriebenen Art und, an diesen satt anschliessend, eine eintrittsseitige, poröse Stützwand 4 und eine austrittsseitige, poröse Stützwand 6. Die Teile 4, 6 und 8 sollen im Gehäuse 2 dicht eingebaut, z.B. eingeklebt sein, um Strömungs-Nebenschlüsse für das Filtrat zu vermeiden. Mindestens die eintrittsseitige Stützwand 4 ist als mechanisches Feinfilter ausgebildet, allenfalls auch die austrittsseitige Stützwand 6; die Letztere kann je nach Anforderungen an das Filter auch mit grösserer Porenweite oder in Form eines Lochbleches oder dergleichen ausgeführt sein. Die satt anliegenden Stützwände 4 und 6 verleihen dem porösen Formkörper 8 ausreichenden mechanischen Halt, um darin Rissbildung oder Bruch, beispielsweise bei Druckstössen, zu verhindern.

Das in Fig. 3 dargestellte Reinigungsfilter ist insbesondere für die Trinkwasseraufbereitung im Haushalt vorgesehen, jedoch selbstverständlich für mancherlei andere Anwendungen geeignet. Eine Filtereinheit 10 ist in einem Filtergehäuse eingebaut, bestehend aus einem Unterteil mit Gehäusewand 23, Boden 24 und Eintrittsstutzen 25, und einem mit der Wand 23 verschraubten Gehäusedeckel 21' mit Austrittsstutzen 22'. Im Gehäusehohlraum 19 können bei Bedarf weitere Filterstoffe, z.B. ein granulatförmiger Ionenaustauscher, untergebracht werden.

Die Filtereinheit 10 hat im wesentlichen hohlzylindrische Gestalt, mit äusserem Mantelrohr 14 und innerem Mantelrohr 16, die satt anliegende, poröse Stützwände für den zwischenliegenden Adsorptionskörper 18 bilden. An der oberen Stirnseite ist die Filtereinheit 10 dicht mit dem Gehäusedeckel 21' verbunden und an der unteren Stirnseite mit einem dichten Deckel 12 verschlossen, so dass das Filtrat zwangsweise über die Aussenfläche 13 der Stützwand 14 eintritt und über die Innenfläche 15 der Stützwand 16 in die Innenbohrung 11 austritt. Um ein sattes Anliegen zwischen dem Formkörper 18 und den Stützwänden 14 und 16 zu gewährleisten, kann auch eine hohlkegelige Gestalt dieser Teile zweckmässig sein. Das satte, den Formkörper mechanisch stützende Anliegen der Stützwände bzw. Mantelrohre kann jedoch auch mit anderen, weiter unten beschriebenen Massnahmen bei der Herstellung der Filtereinheit erreicht werden. Die eintrittsseitige Stützwand (äusseres Mantelrohr 14) ist wiederum als mechanisches Feinfilter, vorzugsweise in Form eines Sinterkörpers ausgebildet, und der Adsorptionskörper (Formkörper) 18 hat die gleichen wesentlichen Eigenschaften, wie sie dem Adsorptionskörper 8 nach Fig. 1 zugeschrieben worden sind. Die austrittsseitige Stützwand 16 (inneres Mantelrohr) kann ebenfalls als Sinterkörper, aber auch in anderer Form, z.B. als gelochtes Rohr oder als Drahtgeflecht usw. ausgeführt sein.

Die den Formkörper 8' bzw. 18 einfassenden, eintrittsseitigen und austrittsseitigen Stützwände können grundsätzlich als separate Teile geformt sein. Zweckmässig - jedenfalls für die als mechanisches Feinfilter ausgebildete, eintrittsseitige Stützwand - ist indessen eine haftende Verbindung an der gemeinsamen Berührungsfläche zwischen Stützwand und Adsorptionskörper. Wird das Feinfilter als Sinterkörper gestaltet, so kann gleichzeitig mit dessen Herstellung eine Versinterung der Berührungsflächen wie folgt herbeigeführt werden:

Der wie oben beschrieben nach der Herstellung ausgeformte Adsorptionskörper wird in eine zweite Form gegeben, welche Raum für die Dicke der zu bildenden eintrittsseitigen (gegebenenfalls auch austrittsseitigen) Stützwand lässt. Beim Beispiel einer Filtereinheit 10 gemäss Fig. 3 wird in den entsprechenden hohlzylindrischen Raum für die Stützwand 14 (Wandstärke 5-20 mm je nach Ausführung) ein sinterbares Granulat, vorzugsweise wiederum von der Sorte GUR 212, eingefüllt und durch Vibrieren verdichtet. Der so mit Polyethylen-Granulat hinterfüllte Adsorptionskörper wird dann in einen Ofen gegeben, um das Granulat während etwa einer Stunde bei mindestens 180 °C zu versintern. Die Temperatur-Führung soll so erfolgen, dass keine Volumenverschmelzung im Material der Stützwand eintritt und auch die Struktur des Adsorptionskörpers nicht (z.B. durch Verbrennung) beeinträchtigt wird. Durch den Sintervorgang entsteht ein mechanisches Feinfilter mit einer maximalen Porenweite von etwa 4 µm bzw. einer Filterfeinheit von etwa 1 µm. Dieses Feinfilter ist als feste Stützwand mit dem Adsorptionskörper oberflächlich versintert. Für die austrittsseitige Stützwand (inneres Mantelrohr) 16 kann das selbe Sintermaterial verwendet werden, das jedoch als vorgefertigter Rohrabschnitt (Wandstärke etwa 5 mm) axial in den Adsorptionskörper eingeschoben wird. Wie erwähnt, muss diese Wand nicht notwendigerweise als Feinfilter wirken, weshalb sie auch eine wesentlich grössere Porenweite haben kann.

Die in der beschriebenen Weise hergestellte Filtereinheit hält im Filtrat vorhandene feste, ausgeflockte oder gallertige Schwebeteilchen von wenigstens etwa 1 µm an ihrer Eintrittsseite, d.h. am mechanischen Feinfilter zurück. Solche Teile - einschliesslich die meisten Bakterien - können somit nicht in den Adsorptionskörper gelangen. Der letztere wirkt rein adsorptiv zur Eliminierung von gelösten Verunreinigungen, wie Geschmackstoffe, Farbstoffe usw. Insgesamt wird eine hohe Adsorptionskapazität bei ausreichender Durchflussleistung für das Filtrat erzielt. Bei einer gemäss Fig. 3 aufgebauten und in der beschriebenen Weise hergestellten Filtereinheit mit einer Länge von etwa 110 mm und einem Durchmesser von etwa 100 mm wurde bei einem Wasserdruck von 4 bar ein Wasserdurchfluss von etwa 1,5 l/min. gemessen.

Dank dem Umstand, dass praktisch keine Tiefenfiltration auftritt, kann die Filtereinheit auch sehr wirksam rückgespült werden. Die Rückspülung kann natürlich einfach durch Hindurchpressen von Wasser oder Pressluft in umgekehrter Richtung erfolgen. Da jedoch eine Rückspülung des Adsorptionskörpers und der austrittsseitigen Stützwand im allgemeinen nicht notwendig ist, wird vorzugsweise das mechanische Feinfilter allein rückgespült, wofür sich eine Ausführungsvariante nach Fig. 4 und 5 besonders eignet.

Bei der Variante nach Fig. 4 und 5 sind in der eintrittsseitigen, etwas dicker ausgeführten Stützwand 14' eine Anzahl von über den Umfang verteilten Längsbohrungen 28 vorgesehen, die von der oberen Stirnseite ausgehen und bis in den Bereich der unteren Stirnseite reichen, dort jedoch verschlossen sind. Sämtliche Bohrungen 28 stehen mit einer Ringnut 29 im Deckel 21' in Verbindung. Der Deckel ist mit einem Anschlussstutzen 30 für das Rückspülmedium, vorzugsweise Pressluft, versehen, der zur Ringnut 29 führt. Im Stutzen 30 oder ausserhalb ist ein Rückschlag-oder steuerbares Ventil vorgesehen (nicht dargestellt). Der Druck des durch den Stutzen 30 eingeleiteten Rückspülmediums verteilt sich auf sämtliche Kanäle 28 und in diesen über die ganze Länge der Stützwand. Vorzugsweise können jeweils zwischen den Bohrungen 28 von aussen her Längsnuten 27 angebracht werden, welche sich ebenfalls über die Länge der Stützwand erstrecken, jedoch deren obere Stirnseite nicht erreichen (siehe Fig. 4). Solche nuten 27 vergrössern die wirksame Eintrittsfläche des Feinfilters beträchtlich und erleichtern anderseits den Austritt des Rückspülmediums (Pressluft) während des Rückspülvorgangs.

Für das in Beispielen beschriebene Reinigungsfilter sind natürlich auch abweichende Bauformen denkbar, und beim Herstellungsverfahren sind Varianten zu den beispielsweise beschriebenen Verfahrensschritten möglich. So richtet sich die Filterfeinheit des mechanischen Feinfilters nach dem jeweiligen Verwendungszweck bzw. der minimalen Grösse der im Filtrat vorkommenden festen Partikel; massgebend ist im Falle des Feinfilters, dass solche Partikel nicht bis in den Adsorptionskörper gelangen und ihn verstopfen. Anstelle von sinterfähigem Kunststoff-Granulat kommen durchaus auch andere Materialien für das Feinfilter bzw. für die Stützwände in Frage, z.B. poröse Keramik usw. Falls besondere Anforderungen an die Keimfreiheit des Filtrats gestellt sind, kann das Feinfilter (oder beide Stützwände) mit einem bakterientötenden Mittel, z.B. fein verteiltem Silber, "imprägniert" werden. - Wiederum sind auch andere organische Bindemittel für den Adsorptionskörper denkbar, und das Vorgehen beim Mischen und insbesondere die Temperaturführung beim Verschwelen und Verkoken richtet sich danach. Wesentlich dabei ist, dass im Endzustand des hergestellten Formkörpers die Poren des Adsorptionsmittel-Granulats nicht oder höchstens in geringem Masse durch das Bindemittel "verstopft" sind, sondern dass vielmehr das Bindemittel soweit verschwelt und möglichst teilweise auch verkokt und dadurch "aktiviert" ist, dass es seinerseits zum Teil adsorptionsfähig ist.

## Patentansprüche

1. Verfahren zur Herstellung einer Filtereinheit in Gestalt eines gas- und flüssigkeitsdurchlässigen, adsorptiven Formkörpers, dadurch **gekennzeichnet**,
- dass man Körner eines Adsorptionsmittels, insbesondere Aktivkohle, und ein körniges, thermoplastisches organisches Bindemittel trocken mischt,
- dass man das trockene, körnige Gemisch in eine Form einbringt und in dieser verdichtet,
- dass man das Gemisch in der Form bei weitgehender Verhinderung von Luftzutritt auf eine Temperatur wesentlich über dem plastischen Bereich des Bindemittels erhitzt und solange hält, dass ein Verschwelen und mindestens teilweises Verkoken des Bindemittels eintritt,
- und dass man den so gebildeten Formkörper nach Abkühlung ausformt.

2. Verfahren nach Anspruch 1, dadurch gekennzeichnet, dass man als Bindemittel hochmolekulares Polyethylen verwendet.

3. Verfahren nach Anspruch 1 oder 2, dadurch gekennzeichnet, dass man ein Bindemittel-Granulat verwendet, dessen Körner offene Mikroporen aufweisen.

4. Verfahren nach Anspruch 3, dadurch gekennzeichnet, dass man vor dem Mischen des Bindemittels mit dem Adsorptionsmittel eine Vormischung des Bindemittel-Granulats mit staubfeiner Kohle herstellt.

5. Verfahren nach einem der vorangehenden Ansprüche, dadurch gekennzeichnet, dass man den Formkörper an seiner Filtrat-Eintrittsseite zweck Oberflächenvergrösserung mit rillenförmigen Vertiefungen versieht.

6. Verfahren nach Anspruch 1, dadurch gekennzeichnet, dass man mindestens an der Filtrat-Eintrittsseite des adsorptiven Formkörpers eine poröse Stützwand als mechanisches Feinfilter anbringt.

7. Verfahren nach Anspruch 6, dadurch gekennzeichnet, dass man die Stützwand als Sinterkörper herstellt.

8. Verfahren nach Anspruch 7, dadurch gekennzeichnet, dass man den ausgeformten Adsorptionskörper in eine die Gestalt der Stützwand bestimmende, zweite Form einbringt, mit einem sinterbaren Granulat hinterfüllt und dieses in sich selbst und mit dem Adsorptionskörper versintert.

9. Verfahren nach Anspruch 8, dadurch gekennzeichnet, dass man für das sinterbare Granulat einen thermoplastischen Kunststoff, vorzugsweise Polyethylen verwendet.

10. Filtereinheit, hergestellt nach einem Verfahren gemäss Anspruch 1, mit einem eine Filtrat-Eintrittsseite (3,13) und eine Filtrat-Austrittsseite (5,15) aufweisenden Adsorptionskörper (8,8' ,18) in Gestalt eines Formkörpers, der aus untereinander verbundenen Körnern eines Adsorptionsmittels, insbesondere Aktivkohle besteht, dadurch gekennzeichnet, dass die Körner des Adsorptionsmittels in der Reststruktur eines verschwelten, mindestens teilweise offenporig verkokten und Mikroporen aufweisenden organischen Bindemittels fixiert sind, wobei die Reststruktur des Bindemittels eine Körnigkeit aufweist, welche Makroporen zwischen den Körnern des Adsorptionsmittels freilässt.

11. Filtereinheit nach Anspruch 10, dadurch gekennzeichnet, dass die Filtrat-Eintrittsseite (13) des Adsorptionskörpers (8) durch Nuten (7) oder andere Vertiefungen vergrössert ist.

12. Filtereinheit nach Anspruch 10, dadurch gekennzeichnet, dass der Adsorptionskörper (8, 8', 18) zwischen einer eintrittsseitigen und einer austrittsseitigen, je satt anschliessenden, porösen Stützwand (4, 6; 14, 16) gefasst ist, wobei mindestens die eintrittsseitige Stützwand (4, 14) als mechanisches Feinfilter ausgebildet ist.

13. Filtereinheit nach Anspruch 12, dadurch gekennzeichnet, dass der Adsorptionskörper (8) im wesentlichen zylindrisch ist und mit stirnseitig anschliessenden Stützwänden (4, 6) von einem rohrförmigen Gehäuse (2) umfasst ist.

14. Filtereinheit nach Anspruch 12, dadurch gekennzeichnet, dass der Adsorptionskörper (18) im wesentlichen hohlzylindrische oder hohlkegelige Gestalt aufweist und dass die Stützwände (14, 16) aussen bzw. innen anschliessende Mantelrohre sind.

15. Filtereinheit nach einem der Ansprüche 12 bis 14, dadurch gekennzeichnet, dass mindestens die eintrittsseitige Stützwand (4, 14) ein Sinterkörper ist.

16. Filtereinheit nach Anspruch 15, dadurch gekennzeichnet, dass der Sinterkörper (4, 14) aus Granulat eines thermoplastischen Kunststoffes, insbesondere Polyethylen, besteht.

17. Filtereinheit nach Anspruch 16, dadurch gekennzeichnet, dass die Granulat-Körner mikroporös sind.

18. Filtereinheit nach Anspruch 12, dadurch gekennzeichnet, dass der Adsorptionskörper (8', 18) mindestens mit der eintrittsseitigen Stützwand (4, 14) an der gemeinsamen Berührungsfläche verbunden ist.

19. Filtereinheit nach Ansprüchen 15 und 18, dadurch gekennzeichnet, dass der Adsorptionskörper (8', 18) mindestens mit der eintrittsseitigen Stützwand (4, 14) versintert ist.

20. Filtereinheit nach Anspruch 12, dadurch gekennzeichnet, dass die Filtrat-Eintrittsseite (3, 13) an der eintrittsseitigen Stützwand (4, 14') durch Nuten (27) oder andere Vertiefungen vergrössert ist.

21. Filtereinheit nach Anspruch 12, dadurch gekennzeichnet, daaa die eintrittsseitige Stützwand (14') mit Innenkanälen (28) zur Durchleitung eines Rückspülmediums versehen ist.

## Claims

1. A process for producing a filter unit in the form of an adsorptive moulding permeable to gas and liquid, characterised in that
- grains of an adsorbent, particularly activated carbon, and a granular, thermoplastic organic binder are dry-mixed,
- that the dry granular mixture is introduced into a mould and compacted in the latter,
- that the mixture is heated in the mould, substantially preventing the access of air, to a temperature significantly above the plastic range of the binder, and is held until carbonisation and at least partial coking of the binder occurs,
- and that the moulding thus formed is demoulded after cooling.

2. A process according to claim 1, characterised in that high molecular weight polyethylene is used as the binder.

3. A process according to claim 1 or 2, characterised in that a granular binder material is used, the grains of which have open micropores.

4. A process according to claim 3, characterised in that before mixing the binder with the adsorbent a preliminary mixture is prepared of the granulated binder material with carbon as fine as dust.

5. A process according to any one of the preceding claims, characterised in that the moulding is provided on its filtrate inlet side with channel-shaped indentations for the purpose of increasing its surface.

6. A process according to claim 1, characterised in that a porous supporting wall is provided as a fine mechanical filter on at least the filtrate inlet side of the adsorptive moulding.

7. A process according to claim 6, characterised in that the supporting wall is produced as a sintered body.

8. A process according to claim 7, characterised in that the demoulded adsorption body is introduced into a second mould which determines the form of the supporting wall, back-filled with a sinterable granulated material, and the latter is self-sintered and sintered to the adsorption body.

9. A process according to claim 8, characterised in that a synthetic thermoplastic material, preferably polyethylene, is used as the sinterable granular material.

10. A filter unit produced by a process according to claim 1, comprising an adsorption body (8, 8', 18) in the form of a moulding having a filtrate inlet side (3, 13) and a filtrate outlet side (5, 15), which moulding consists of grains of an adsorbent, particularly activated carbon, which are bonded to each other, characterised in that the grains of the adsorbent are fixed within the residual structure of a carbonised organic binder, which is at least partially coked with open pores and which comprises micropores, wherein the residual structure of the binder has a granularity which leaves macropores free between the grains of the adsorbent.

11. A filter unit according to claim 10, characterised in that the filtrate inlet side (13) of the adsorption body (8) is enlarged by channels (7) or other indentations.

12. A filter unit according to claim 10, characterised in that the adsorption body (8, 8', 18) is held between a porous supporting wall (4, 6: 14, 16) on the inlet side and on the outlet side, each of which closely adjoins the adsorption body, wherein at least the supporting wall (4, 14) on the inlet side is constructed as a fine mechanical filter.

13. A filter unit according to claim 12, characterised in that the adsorption body (8) is substantially cylindrical and is embraced, with supporting walls (4, 6) adjoining its end faces, by a tubular housing (2).

14. A filter unit according to claim 13, characterised in that the adsorption body (18) has a substantially hollow cylindrical or hollow conical form, and that the supporting walls (14, 16) are externally or internally adjoining casing tubes.

15. A filter unit according to any one of claims 12 to 14, characterised in that at least the supporting wall (4, 14) on the inlet side is a sintered body.

16. A filter unit according to claim 15, characterised in that the sintered body (4, 14) consists of granular material of a synthetic thermoplastic material, particularly polyethylene.

17. A filter unit according to claim 16, characterised in that the grains of the granular material are microporous.

18. A filter unit according to claim 12, characterised in that the adsorption body (8', 18) is joined at least to the supporting wall (4, 14) on the inlet side at their common contact surface.

19. A filter unit according to claims 15 and 18, characterised in that the adsorption body (8', 18) is sintered at least to the supporting wall (4, 14) on the inlet side.

20. A filter unit according to claim 12, characterised in that the filtrate inlet side (3, 13) is enlarged at the supporting wall (4, 14') on the inlet side by channels (27) or other indentations.

21. A filter unit according to claim 12, characterised in that the supporting wall (14') on the inlet side is provided with internal channels (28) for conveying a back-flushing medium through.

## Revendications

1. Procédé pour fabriquer une unité de filtre agencée sous la forme d'un corps moulé adsorbant, perméable aux gaz et aux liquides, caractérisé en ce
- qu'on mélange à sec des grains d'un agent adsorbant, notamment du charbon actif, et un liant organique thermoplastique à l'état de granulés,
- qu'on introduit le mélange sec sous forme de granulés dans un moule et qu'on le tasse dans ce moule,
- qu'on chauffe et on maintient le mélange dans le moule tout en empêchant dans une large mesure une pénétration d'air, à une température nettement supérieure à la gamme plastique du liant, jusqu'à ce qu'il se produise une carbonisation et au moins une cokéfaction partielle du liant, et
- qu'on démoule le corps moulé ainsi formé, après refroidissement.

2. Procédé selon la revendication 1, caractérisé en ce qu'on utilise comme liant un polymère à haut poids moléculaire.

3. Procédé selon la revendication 1 ou 2, caractérisé en ce qu'on utilise un liant formé de granulés, qui possèdent des micropores ouverts.

4. Procédé selon la revendication 3, caractérisé en ce qu'avant le mélange de l'agent adsorbant au liant, on réalise un mélange préalable du liant à l'état de granulés avec du charbon finement divisé.

5. Procédé selon l'une des revendications précédentes, caractérisé en ce qu'on équipe le corps moulé de renfoncements en forme de rainures au niveau de son côté d'entrée du filtrat, de manière à accroître la surface.

6. Procédé selon la revendication 1, caractérisé en ce qu'on installe au moins sur le côté d'entrée du filtrat dans le corps moulé adsorbant, une paroi poreuse de support en tant que filtre mécanique fin.

7. Procédé selon la revendication 6, caractérisé en ce qu'on fabrique la paroi de support sous la forme d'un corps fritté.

8. Procédé selon la revendication 7, caractérisé en ce qu'on introduit le corps adsorbant démoulé, dans un second moule qui détermine la forme de la paroi de support, qu'on le remplit avec des granulés pouvant être frittés et qu'on le fritte en soi proprement dit et avec le corps adsorbant.

9. Procédé selon la revendication 8, caractérisé en ce qu'on utilise pour les granulés pouvant être frittés, une matière thermoplastique, de préférence du polyéthylène.

10. Unité de filtre fabriquée conformément à un procédé selon la revendication 1, comportant un corps adsorbant (8,8',18), possédant un côté entrée (3,13) pour le filtrat et un côté sortie (5,15) pour le filtrat et agencé sous la forme d'un corps moulé, qui est constitué par des grains, reliés entre eux, d'un agent adsorbant, notamment de charbon actif, caractérisée en ce que les grains de l'agent adsorbant sont fixés dans la structure résiduelle d'un liant organique carbonisé, cokéfié au moins partiellement de manière à présenter des pores ouverts et comportant des micropores, la structure résiduelle du liant possédant une granulosité qui laisse libres les macropores présents entre les grains de l'agent adsorbant.

11. Unité de filtre selon la revendication 10, caractérisée en ce que le côté entrée du filtrat (13) du corps adsorbant (8) est accru par la présence de rainures (7) ou d'autres renfoncements.

12. Unité de filtre selon la revendication 10, caractérisée en ce que le corps adsorbant (8,8',18) est enserrée entre une paroi de support (4, 14) située côté entrée et une paroi de support (6, 16) située de côté sortie, les parois se raccordant respectivement du corps adsorbant, au moins la paroi de support (4, 14) située côté entrée étant agencée sous la forme d'un filtre mécanique fin.

13. Unité de filtre selon la revendication 12, caractérisée en ce que le corps adsorbant (8) est essentiellement cylindrique et est entouré par des parois de support (4,6), qui se raccordent frontalement, d'un boîtier de forme tubulaire (2).

14. Unité de filtre selon la revendication 12, caractérisée en ce que le corps adsorbant (18) possède essentiellement la forme d'un cylindre creux ou d'un cône creux et que les parois de support (14,16) sont des tubes enveloppes se raccordant extérieurement ou intérieurement.

15. Unité de filtre selon l'une des revendications 12 à 14, caractérisée en ce qu'au moins la paroi de support (4,14) située côté entrée est un corps fritté.

16. Unité de filtre selon la revendication 15, caractérisée en ce que le corps fritté (4,14) est formé par des granulés d'une matière thermoplastique, notamment du polyéthylène.

17. Unité de filtre selon la revendication 16, caractérisée en ce que les granulés sont microporeux.

18. Unité de filtre selon la revendication 12, caractérisée en ce que le corps adsorbant (8;18) est relié au moins à la paroi de support (4,14) située côté entrée, au niveau de la surface de contact commune.

19. Unité de filtre selon les revendications 15 et 18, caractérisée en ce que le corps adsorbant (8',18) est fritté au moins avec la paroi de support (4,14) située côté entrée.

20. Unité de filtre selon la revendication 12, caractérisée en ce que le côté entrée (3,13) pour le filtrat est étendu, au niveau de la paroi de support (4,14') située côté entrée, par des rainures (27) ou par d'autres renfoncements.

21. Unité de filtre selon la revendication 12, caractérisée en ce que la paroi de support (14'), située côté entrée, est pourvue de canaux intérieurs (28) pour la circulation d'un fluide de rétrolavage.
